(19) Europäisches Patentamt
European Patent Office
Office européen des brevets

(11) Publication number : 0 336 297 B1

# (12) EUROPEAN PATENT SPECIFICATION

(45) Date of publication of patent specification : **26.08.92 Bulletin 92/35**

(51) Int. Cl.$^5$ : **F16C 19/52**

(21) Application number : **89105620.2**

(22) Date of filing : **30.03.89**

## (54) Rolling contact device.

(30) Priority : **31.03.88 JP 43329/88**

(43) Date of publication of application : **11.10.89 Bulletin 89/41**

(45) Publication of the grant of the patent : **26.08.92 Bulletin 92/35**

(84) Designated Contracting States : **DE FR GB IT**

(56) References cited :
**EP-A- 0 304 397**
**DE-A- 1 425 982**
**DE-A- 2 707 352**
**FR-A- 1 464 889**

(56) References cited :
**GB-A- 1 189 965**
**JP-Y- 5 420 534**
**US-A- 2 352 911**
**US-A- 3 451 734**

(73) Proprietor : **SANKYO MANUFACTURING COMPANY, LTD.**
**37-3, Tabatashinmachi-3-chome**
**Kita-ku Tokyo (JP)**

(72) Inventor : **Kato, Heizaburo**
**1434-1, Hansei, Kikugawacho**
**Ogasa-gun Shizuoka-ken (JP)**

(74) Representative : **Kraus, Walter, Dr. et al**
**Patentanwälte Kraus, Weisert & Partner**
**Thomas-Wimmer-Ring 15**
**W-8000 München 22 (DE)**

EP 0 336 297 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a rolling contact device comprising:

a shaft having an outer track surface, an outer ring surrounding the shaft and having an inner track surface, and rolling elements disposed between the shaft and the outer ring in a relationship spaced apart from each other circumferentially of the shaft, the outer peripheral surface of the outer ring being in rolling contact with a track surface of a first element of an equipment or an apparatus.

Such rolling contact device may be e.g. a cam follower used in the technical field of machine tool or the like.

Heretofore, there is known a rolling contact device of the above-mentioned type, in which one end of the shaft is secured to a second element of the machine and the peripheral surface of the outer ring is made in rolling contact with a cam surface of a cam for serving as a cam follower. Such a cam follower is disclosed, for example, in Japanese Utility Model Publication 54-20534. The rolling contact device of this type is also used for moving a machine element together with the rolling contact device along a guiding rail with one end of the shaft sucured to the machine element and with the peripheral surface of the outer ring in rolling contact with the rail.

The above-mentioned rolling contact device of prior art suffers from a problem that when a radial load greater than a certain value, such as an impact load, is applied to the outer ring permanent deformations or press traces occur on the contact portions among the track surface of the shaft, the rolling elements and the track surface of the outer ring, thereby deteriorating the precision of the device, and in case the load is excessive, failures of the device including permanent deformation or bending of the shaft may occur.

The object of the present invention is to solve the above-mentioned problem of the Prior art, and to provide a rolling contact device involving little risk of Producing press traces at contact portions or permanent bending of the shaft.

This object is achieved by a rolling contact device of the type mentioned in the beginning, which, in accordance with the invention is charcterized by a projection provided on said shaft and having a load supporting portion opposing to said track surface of said element with a small gap defined therebetween, said projection being located between the outer ring and one end portion of the shaft which is secured to a second element of the equipment or the apparatus;

said projection being arranged such that, when a radial load greater than a predetermined value acts on said outer ring, said track surface of said first element may abut on said load supporting portion of said projection.

In consequence, even if an excessive load acts on the outer ring, the load acting on the contact portions among the rolling elements and the tracks of the outer ring and the shaft is maintained rather low, resulting in an increased allowable load without causing any permanent deformation of the shaft.

Preferred embodiments of the invention are described below with reference to the drawings, wherein:

Fig. 1 is a cross sectional view of a rolling contact device according to an embodiment of the present invention.

Fig. 2 is a cross-sectional view taken on line II-II of Fig. 1.

Fig. 3 is a cross-sectional view taken on line III-III of Fig. 1.

Fig. 4 shows functions of rolling contact devices.

Fig. 5 is a cross-sectional view of a rolling contact device according to a second embodiment of the present invention.

Fig. 6 is a cross-sectional view taken on line VI-VI of Fig. 5.

Fig. 7 is a cross sectional view taken on line VII-VII of Fig. 5.

Figs. 1, 2 and 3 show a rolling contact device according to the first embodiment of the present invention.

The rolling contact device comprises a shaft 1 having an outer track surface 1a, an outer ring 2 surrounding the shaft 1 and having an inner track surface 2a, and rolling elements 3 arranged between the shaft 1 and the outer ring 2 in rolling contact with the track surface 1a of the shaft 1 and the track surface 2a of the outer ring 2, and the outer peripheral surface of the outer ring 2 is in rolling contact with a track surface of an equipment or an apparatus, i.e. with. a cam surface 5a of a cam 5 in the illustrated embodiment. The rolling elements 3 are composed of needle rollers arranged in a relationship spaced apart from each other circumferentially of the shaft 1. The shaft 1 is integrally formed with a flange 1b at its left end for preventing the outer ring 2 from moving to the left and slipping out from the shaft 1. Right end portion 1c of the shaft 1 is fitted into an element 6 of the equipment or the apparatus and secured thereto.

A projection 4 located axially adjacent to the right end of the track surface 1a (Fig. 1) includes a load supporting portion 4a at its peripheral portion, which is radially opposed to the cam surface 5a with a small gap G defined therebetween. The projection 4 is constituted by an annular member fitted on and fixed to the shaft 1.

When a radial load F greater than a predetermined value acts on the outer ring 2, the load supporting portion 4a abuts on the cam surface 5a, thereby decreasing a load acting on contact portions among the track surface 2a of the outer ring 2, the rolling elements 3 and the track surface 1a of the shaft 1. As shown in Fig. 3, the load supporting portion 4a has flat surfaces 4b. These flat surfaces 4b are opposed to flat portions of cam surface 5a, so as to enable the surfaces 4b to preferably abut on the cam surface 5a. However, the projection may have a circular cross-section without forming any flat surface such as flat surface 4b. In the illustrated embodiment, flat surfaces 4b are provided at both upper and lower portions of the projection 4 in consideration of the fact that the cam 5 may be located at the lower side of the rolling contact device as viewed in Fig. 1.

If a rolling contact device does not have the projection 4, the relation among a radial elastic deformation δ (mm) of the outer ring 2, maximum load Qm (N) acting on the rolling element, and an effective length La (mm) of the rolling element 3 is expressed by the following equation:

$$\delta = \frac{0.0006}{La^{0.8}} \left( \frac{Qm}{9.80665} \right)^{0.9} \qquad (1)$$

Assuming that a radial load corresponding to the basic static nominal load Co (N) of the device acts on the outer ring 2, the maximum load Qm on each rolling element 3 can be calculated by the following equation (2), in which Z designates the number of the rolling elements 3. In such a rolling contact device or bearing under an usual operation, it is experimentally recognized that a deformation of a rolling element or a roller smaller than 1/10000 of the rolling element diameter is permitted without causing any operational trouble. Accordingly, a static load causing such permanent deformation is referred to as a basic static nominal load.

$$Qm = \frac{4.08}{Z} Co \qquad (2)$$

When a radial force F (N) acts on the outer ring 2, the resulted bending deformation V (mm) of shaft 1 is expressed by the following equation (3), in which E, D and L designate Young's modulus ($N/mm^2$) the diameter (mm) of the right portion 1c of shaft 1 which is supported by the element 6, and the length (mm) between the left end of the right portion 1c of the shaft 1 and the acting point of load F, respectively.

$$V = \frac{64FL^3}{3\pi ED^4} \qquad (3)$$

The elastic deformation δ of the outer ring 2 deduced from the equations (1) and (2) is based on the assumption that no projection 4 is provided and a basic static nominal load Co is applied. The bending deformation V resulted from a radial load acting on the outer ring 2, which is equal to the basic static nominal load, is calculated from the equation (3). When the basic static nominal load acts on the outer ring from the cam 5, the outer ring 2 deforms downwardly by an amount of the sum of elastic deformation δ and bending deformation V, i.e. δ + V. In consequence, the above-mentioned gap G is preferred to be below the deformation amount δ + V. In this configuration, when a load greater than the basic static nominal load is applied, the cam surface 5c is necessarily in contact with the load supporting portion 4a, thereby decreasing the load acting on rolling contact portions.

Exactly speaking, the bending deformation V of the shaft 1 at the radial load acting point is different from the shaft deformation at the position of the projection 4. However, sufficient effects can be obtained by simply defining the gap G below the value δ + V as mentioned above, because the above-mentioned difference between the exact deformation and the approximate one is very small, and even if the gap is a little larger than a proper value, the cam surface 5a abuts to load supporting portion 4a through a thin lubricant film and hence the load acting on the rolling contact portions is decreased.

In actual operation of the device, it is desired for the cam surface 5a to slide along the load supporting portion 4a with a lubricant oil existing in the gap G, as similar to the case of a plane bearing. For realizing this feature, the amount of the gap G is preferred to be a little greater than the sum of the elastic deformation of the outer ring caused when maximum radial load (design load) is applied thereto in an usual operation of the device and the allowable minimum thickness of lubricant oil film for effecting a fluid lubrication.

Fig. 4 shows a relation between a radial load F (N) acting on the rolling elements and an outer ring deformation δ(mm). In the figure, line W and line X show theoretical characteristics of a device of a prior art which has not any projection such as projection 4. Line W shows a relation between radial elastic deformation δ of the outer ring and a magnitude of radial load, while line X shows a relation between bending deformation (V) of the shaft and magnitude of radial load. Line Y shows a relation between total deformation of the rolling contact device of the above-mentioned prior art, i.e. the sum of the outer ring elastic deformation (indicated by line W) and the shaft bending deformation (indicated by line X), and magnitude of radial load. Line Z shows an example

of a characteristic of the rolling contact device according to the illustrated embodiment of the invention, where the size or depth of gap G is made equal to the sum of the outer ring maximum elastic deformation $\delta_1$ resulted from maximum radial load applied to the outer ring 2 during usual operation, the outer ring displacement $V_1$ caused by shaft bending deformation, and minimum allowable thickness $\delta_2$ of lubricant oil, i.e. $\delta_1 + V_1 + \delta_2$.

As obvious from line Y in Fig. 4, in the prior art, the total deformation of the outer ring increases substantially in proportion to the increase of the radial load, and reaches $\delta_3 + V_3$ when a radial load corresponding to the basic static nominal load Co acts on the outer ring. In an usual operation, i.e. in a radial load range below point Cb which corresponds to the outer ring total displacement $\delta_1 + V_1$, line Y coincides with line Z, in other words, the function of the device of the present invention is identical to that of the device of the prior art. In the range between point Pb and point Pc at which the total displacement of the outer ring reaches the value $\delta_1 + V_1 + \delta_2$, the gap G gradually decreases from the allowable minimum thickness of the lubricant oil film. In this range, since the cam surface 5a abuts on the load supporting portion 4a with oil film interposed therebetween, the total displacement of the outer ring increases along a gentle slope as the load increases (see line Z). When the radial load reaches Cc corresponding to point Pc, the cam surface directly contacts with the load supporting portion 4a with no oil film therebetween. When the radial load further increases beyond point Cc, the total displacement of the outer ring linearly increases along a slope gentler than the above-mentioned slope between point O and point Pb due to the greater stiffness of the rolling contact device. In consequence, the basic static nominal load corresponding to the outer ring total displacement $\delta_3 + V_3$ is Co in the prior art as will be understood from line Y, while in the illustrated embodiment as indicated by line Z, it is Cx which is considerably greater than Co.

As mentioned above, since the outer ring total displacement reaches $\delta_3 + V_3$ only when a greater load Cx is applied on the ring, permanent deformations of the rolling contact portions and permanent deformation of the shaft assumed to be caused by an impact load can be effectively prevented.

Referring to line Z, in the range from Pb to Pc, the oil film gradually becomes thinner with an increasing frictional force accompanied, while in the range from Pc to Px, the cam surface 5a directly abuts on the load supporting portion 4a with no oil film therebetween, making it difficult for the cam surface to move relative to the load supporting portion. Therefore, when a radial load greater than Cb, particularly the load greater than Cc, is applied on the outer ring which is in a rotating state, the rotation of the ring may be abruptly stopped in an inconvenient manner. Consequently, it may be said that the rolling contact device of the present invention is most suitable to be used for a device suffering an impact load which may be applied in a stationary state of the device. For example, the rolling contact device of the invention may be used in an intermittent index device which transforms a continuous rotary motion of an input shaft to an intermittent rotary motion of an output shaft through a cam and rolling contact devices. In this case, there is the possibility that a greater radial impact load may be applied to the outer rings of the rolling contact devices during the intermittent period for which the output shaft and hence the outer rings are in a stationary state, but no permanent deformation of the rolling contact portions or no permanent bending of the shaft may be caused by the impact load.

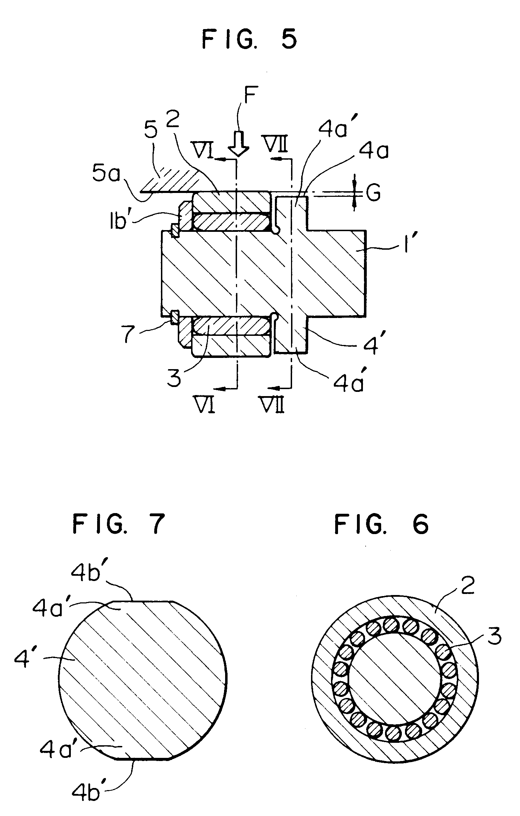

Figs. 5 to 7 show a second embodiment of the present invention. The rolling contact device according to this embodiment includes a projection 4′ which is similar to the projection 4 in the first embodiment, but is formed integral with a shaft 1′, thereby making the projection 4′ stiffer than the projection 4. On the other hand, there is provided a separate support member 1b′ which corresponds to the flange 1b in the first embodiment. The support member 1b′ is fitted on the left end portion of the shaft 1′ and fixed to the shaft 1′ by means of a stop ring 7. The support member 1b′ is fitted and fixed after the rolling elements 3 and the outer ring 2 have been mounted on the shaft 1′, thereby preventing the rolling elements 3 and the outer ring 2 from slipping out from the shaft 1′.

Other features of the second embodiment are similar to those of the first embodiment. Namely, the projection 4′ comprises a load supporting portion 4a′ which is opposite to the cam surface 5a of the cam 5 with a small gap C defined therebetween, and is adapted to abut against the cam surface 5a when a radial load F greater than a predetermined value acts on the outer ring 2. The load supporting portion 4a′ has, as shown in Fig. 7, flat surfaces 4b′ at its upper and lower portions. The size or amount of the gap G may be determined similarly to that of the first embodiment.

As mentioned above, the rolling contact device of the present invention brings about such advantage as to decrease the probability of permanent deformations of the device at its rolling contact portions or at its shaft, when an impact load or the like acts on the outer ring of the device.

## Claims

1. A rolling contact device comprising:

a shaft (1, 1′) having an outer track surface (1a);
an outer ring (2) surrounding said shaft (1, 1′) and having an inner track surface (2a); and
rolling elements (3) disposed between said shaft (1, 1′) and said outer ring (2) in a relationship spaced apart from each other circumferentially of said shaft (1, 1′), the outer peripheral surface of said outer ring (2) being in rolling contact with a track surface (5a) of a first element (5) of an equipment or an apparatus;
characterized by
a projection (4, 4′) provided on said shaft (1, 1′) and having a load supporting portion (4a, 4a′) opposing to said track surface (5a) of said element (5) with a small gap (G) defined therebetween, said projection (4, 4′) being located between the outer ring (2) and one end portion (1c) of the shaft (1,1′) which is secured to a second element (6) of the equipment or the apparatus;
said projection (4, 4′) being arranged such that, when a radial load greater than a predetermined value acts on said outer ring (2), said track surface (5a) of said first element (5) may abut on said load supporting portion (4a, 4a′) of said projection (4, 4′).

**2.** A rolling contact device according to claim 1, characterized in that said projection (4) is an annular member fitted on said shaft (1).

**3.** A rolling contact device according to claim 1, characterized in that said projection (4′) is an annular member formed integral with said shaft (1′).

**4.** A rolling contact device according to claim 1, characterized in that said load supporting portion (4a, 4a′) is located at a periphery of said projection (4, 4′), and includes flat surfaces (4b, 4b′) opposite to flat surfaces of said first element (5).

**5.** A rolling contact device according to claim 1, characterized in that said gap (G) is greater than the sum of a radial elastic deformation of said outer ring (2) caused by a maximum radial load applied to the latter during a usual operation of the device and an allowable minimum thickness of a lubricant oil film existing between said track surface (5a) of said first element (5) and said load supporting portion (4a, 4a′) of said projection (4, 4′).

## Patentansprüche

**1.** Rollkontakteinrichtung, umfassend:
einen Schaft (1, 1′), der eine äußere Laufbahnoberfläche (1a) hat;
einen äußeren Ring (2), der den Schaft (1, 1′) umgibt und eine innere Laufbahnoberfläche (2a) hat; und
Rollelemente (3), die zwischen dem Schaft (1, 1′) und dem äußeren Ring (2) in einer in Umfangsrichtung des Schafts (1, 1′) voneinander beabstandeten Beziehung angeordnet sind, wobei die äußere Umfangsoberfläche des äußeren Rings (2) in Rollkontakt mit einer Laufbahnoberfläche (5a) eines ersten Elements (5) einer Ausrüstung oder einer Einrichtung ist;
**gekennzeichnet** durch
einen Vorsprung (4, 4′), der auf dem Schaft (1, 1′) vorgesehen ist und einen belastungstragenden Teil (4a, 4a′) hat, welcher der Laufbahnoberfläche (5a) des Elements (5) mit einem kleinen Spalt (G), der dazwischen gebildet ist, gegenüberliegt, wobei sich der Vorsprung (4, 4′) zwischen dem äußeren Ring (2) und einem Endteil (1c) des Schafts (1, 1′), welcher an einem zweiten Element (6) der Ausrüstung oder der Einrichtung befestigt ist, befindet;
wobei der Vorsprung (4, 4′) derart angeordnet ist, daß dann, wenn eine radiale Belastung, die größer als ein vorbestimmter Wert ist, auf den äußeren Ring (2) wirkt, die Laufbahnoberfläche (5a) des ersten Elements (5) auf dem belastungstragenden Teil (4a, 4a′) des Vorsprungs (4, 4′) anliegen kann.

**2.** Rollkontakteinrichtung nach Anspruch 1, dadurch **gekennzeichnet** , daß der Vorsprung (4) ein ringförmiges Teil ist, das auf dem Schaft (1) angebracht ist.

**3.** Rollkontakteinrichtung nach Anspruch 1, dadurch **gekennzeichnet** , daß der Vorsprung (4′) ein ringförmiges Teil ist, das integral mit dem Schaft (1′) ausgebildet ist.

**4.** Rollkontakteinrichtung nach Anspruch 1, dadurch **gekennzeichnet**, daß sich der belastungstragende Teil (4a, 4a′) an einem Umfang des Vorsprungs (4, 4′) befindet und flache Oberflächen (4b, 4b′) gegenüber

flachen Oberflächen des ersten Elements (5) aufweist.

5. Rollkontakteinrichtung nach Anspruch 1, dadurch **gekennzeichnet** , daß der Spalt (G) größer ist als die Summe einer radialen elastischen Deformation des äußeren Rings (2), die durch eine maximale radiale Belastung bewirkt wird, welche auf den letzteren während eines üblichen Betriebs der Einrichtung angewandt wird, und einer zulässigen minimalen Dicke eines Schmierölfilms, welcher zwischen der Laufbahnoberfläche (5a) des ersten Elements (5) und dem belastungstragenden Teil (4a, 4a′) des Vorsprungs (4, 4′) vorhanden ist.

## Revendications

1.- Dispositif de contact roulant, comprenant:
un arbre (1, 1′) présentant une surface extérieure formant chemin de roulement (1a);
une bague extérieure (2) entourant ledit arbre (1, 1′) et présentant une surface intérieure formant chemin de roulement (2a); et
des éléments de roulement (3), disposés entre ledit arbre (1, 1′), et ladite bague extérieure (2) à distance les uns des autre dans la direction circonférentielle dudit arbre (1, 1′), la surface périphérique externe de ladite bague extérieure (2) étant en contact roulant avec une surface formant chemin de roulement (5a) d'un premier élément (5) d'un équipement ou d'un appareil;

caractérisé par une saillie (4, 4′) prévue sur ledit arbre (1, 1′) et comportant une partie de support des charges (4a, 4a′) qui fait face à ladite surface formant chemin de roulement (5a) dudit élément (5) avec un petit intervalle (G) défini entre elles, ladite saillie (4, 4′) étant disposée entre la bague extérieure (2) et une partie terminale (1c) de l'arbre (1, 1′) qui est fixée à un second élément (6) de l'équipement ou de l'appareil;

ladite saillie (4, 4′) étant agencée de telle façon que, quand une charge radiale supérieure à une valeur prédéterminée agit sur ladite bague extérieure (2), ladite surface formant chamin de roulement (5a) dudit premier élément (5) puisse buter contre ladite partie de support des charges (4a, 4a′) de ladite saillie (4, 4′).

2.- Dispositif de contact roulant selon la revendication 1, caractérisé en ce que ladite saillie (4) est une pièce annulaire rapportée sur ledit arbre (1)

3.- Dispositif de contact roulant selon la revendication 1, caractérisé en ce que ladite saillie (4′) est un élément annulaire formé d'une seule pièce avec ledit arbre (1′)

4.- Dispositif de contact roulant selon la revendication 1, caractérisé en ce que ladite partie de support des charges (4a, 4a′) est située à la périphérie de ladite saillie (4, 4′) et comprend des méplats (4b, 4b′) opposés à des surfaces planes dudit premier élément (5).

5.- Dispositif de contact roulant selon la revendication 1, caractérisé en ce que ledit intervalle (G) est plus grand que la somme d'une déformation élastique radiale de ladite bague extérieure (2), due à une charge radiale maximale appliquée à cette dernière au cours du fonctionnement normal du dispositif, et d'une épaisseur minimale admissible d'un film d'huile lubrifiante existant entre ladite surface formant chemin de roulement (5a) dudit premier élément (5) et ladite partie de support des charges (4a, 4a′) de ladite saillie (4, 4′).

FIG. 1

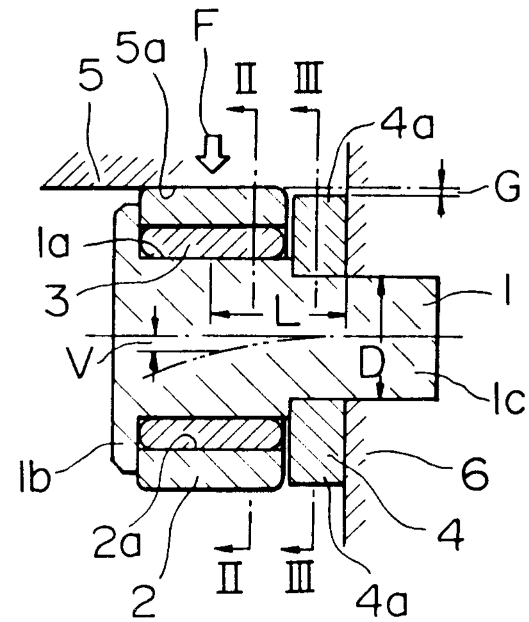


FIG. 3

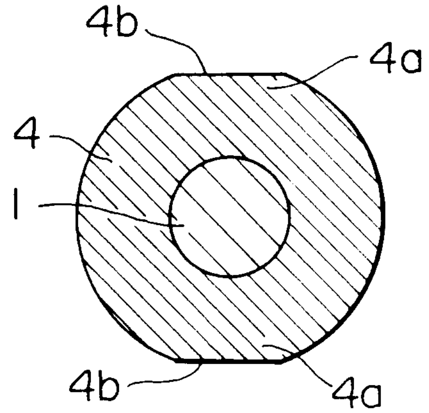


FIG. 2

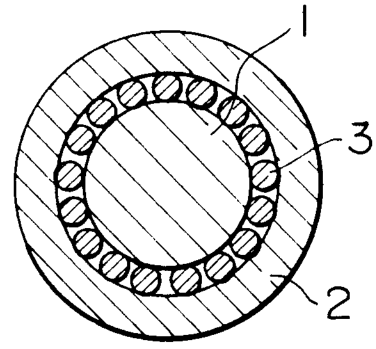

FIG. 4

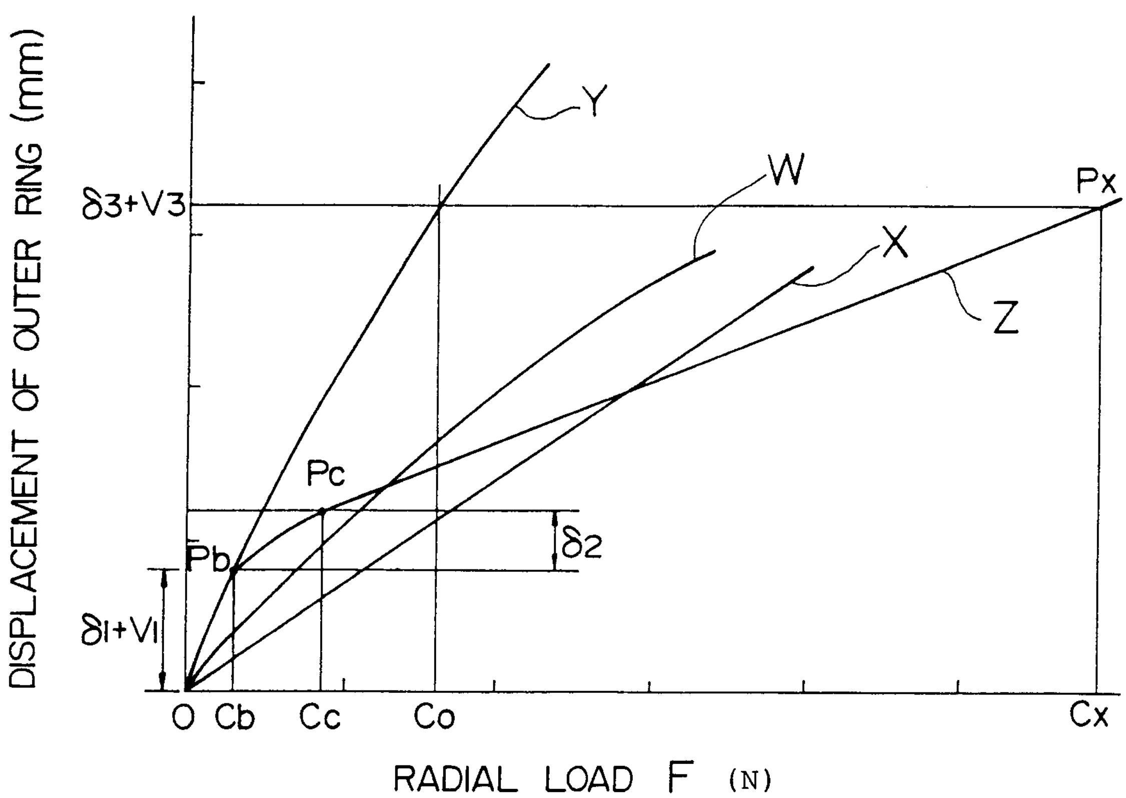
DISPLACEMENT OF OUTER RING (mm)
δ3+V3
δ1+V1
δ2
Y
W
X
Z
Px
Pc
Pb
O
Cb
Cc
Co
Cx
RADIAL LOAD F (N)

FIG. 5

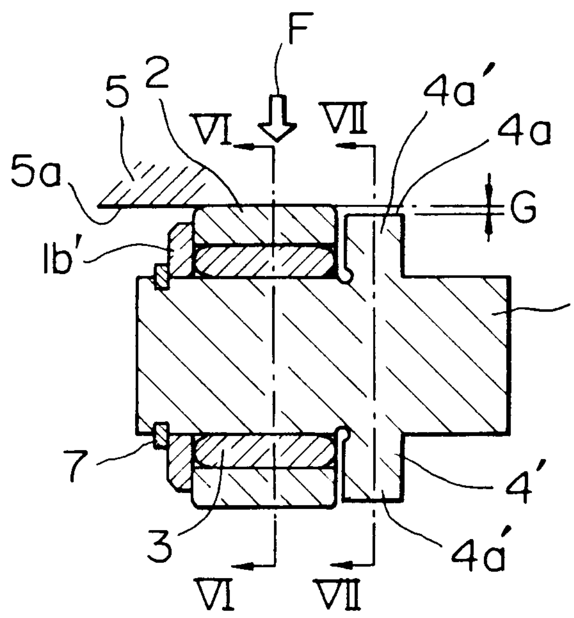


FIG. 7

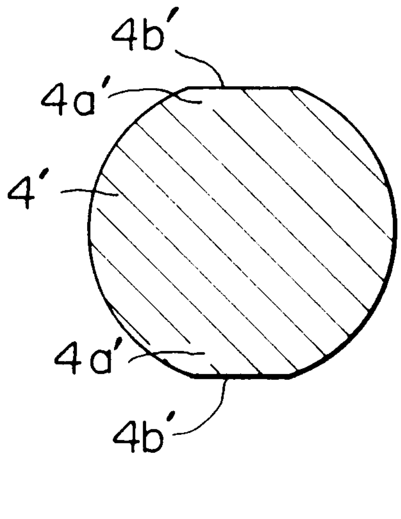


FIG. 6